(19) **Europäisches Patentamt / European Patent Office / Office européen des brevets**

(11) **EP 4 699 892 A1**

(12) **EUROPEAN PATENT APPLICATION**
published in accordance with Art. 153(4) EPC

(43) Date of publication:
**25.02.2026 Bulletin 2026/09**

(21) Application number: **24914918.8**

(22) Date of filing: **29.09.2024**

(51) International Patent Classification (IPC):
**B61L 15/00** (2006.01)  **G06F 30/15** (2020.01)
**G06F 30/20** (2020.01)  **G06F 119/14** (2020.01)
**G06F 119/12** (2020.01)

(86) International application number:
**PCT/CN2024/122322**

(87) International publication number:
**WO 2025/145697 (10.07.2025 Gazette 2025/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 CN 202410022865**

(71) Applicant: **CRSC Research & Design Institute Group Co., Ltd.**
**Beijing 100070 (CN)**

(72) Inventors:
• **ZHANG, Wanqiang**
**Beijing 100070 (CN)**
• **ZHANG, Songchen**
**Beijing 100070 (CN)**
• **LI, Qin**
**Beijing 100070 (CN)**
• **CHEN, Lihua**
**Beijing 100070 (CN)**
• **YAO, Wenhua**
**Beijing 100070 (CN)**
• **GENG, Yehua**
**Beijing 100070 (CN)**
• **WANG, Xixian**
**Beijing 100070 (CN)**

(74) Representative: **Samson & Partner Patentanwälte mbB**
**Widenmayerstraße 6**
**80538 München (DE)**

(54) **TRACTIVE TRAIN GRADIENT CURVE VALUE CALCULATION METHOD AND SYSTEM**

(57) The present invention provides a method and system for calculating a gradient curve value of a traction train, belonging to the technical field of rail transit. The method includes: calculating an initial effective braking curve of the train by segmentally accumulating speed intervals; where a gradient value of the initial effective braking curve is calculated based on a train-chain average gradient principle; correcting the gradient value of the initial effective braking curve to obtain a first effective braking curve; calculating a braking intervention curve according to the first effective braking curve; and correcting the gradient value according to the braking intervention curve, and determining a gradient value adopted for calculating idling braking time within a calculation step. According to the present invention, scenarios such as an abrupt change in a line gradient are considered, and calculation of a gradient value of a monitoring mode curve for a locomotive traction train is corrected in accordance with principles of monitoring efficiency and safety. Train control efficiency is improved, thereby enhancing safety of a monitoring distance of an entire monitoring curve during train movement.

```
Calculate an initial effective braking curve of the train by
segmentally accumulating speed intervals in the case of traction
train braking; where a gradient value of the initial effective braking
curve is calculated based on a train-chain average gradient principle     S101

Correct the gradient value of the initial effective braking curve to
obtain a first effective braking curve                                     S102

Calculate a braking intervention curve according to the first
effective braking curve; where an intervention speed of each point
on the intervention curve is calculated according to a speed of each
point on the first effective braking curve                                 S103

Correct the gradient value according to the braking intervention
curve, and determine a gradient value adopted for calculating idling
braking time within a calculation step                                     S104
```

FIG. 1

EP 4 699 892 A1

**Description**

## TECHNICAL FIELD

The present invention belongs to the technical field of rail transit, and in particular relates to a method and system for calculating a gradient curve value of a traction train.

## BACKGROUND ART

The calculation of train monitoring mode curves needs to be performed according to the braking characteristics of the train, combined with actual gradient combinations, and in accordance with the on-board train control model. Due to the characteristics of multiple marshalling units and long length of locomotive traction trains, the gradient changes within the train chain are complex. Therefore, the calculation method of gradient values is an important factor affecting the on-board ATP equipment of locomotive traction trains to ensure safe operation.

At present, there are 3 mainstream calculation methods for gradient values in the on-board train control model, i.e. unfavorable gradient, actual gradient and average gradient. However, there is a lack of correction algorithms for gradient values in the calculation of the Emergency Braking Deceleration (EBD) curve, the Service Braking Deceleration (SBD) curve, and idling braking time. Since the on-board train control mode curves all adopt the basic principle of reverse-calculating the monitoring curve from the restricted target point, there are two safety issues in complex scenarios with sudden gradient changes. First, when the train travels from an unfavorable combined gradient to a favorable combined gradient, and the train's overspeed triggers the on-board ATP braking, there is a safety risk that the train will eventually overrun the restricted target point. Second, when the train travels from a favorable combined gradient to an unfavorable combined gradient, the derived monitoring curve will have a safety issue of "sawtooth" abrupt changes.

## SUMMARY

In view of the above issues, the present disclosure provides a method and system for calculating a gradient curve value of a traction train.

The content of the present invention is a method for calculating a gradient curve value of a traction train, including:

calculating an initial effective braking curve of the train by segmentally accumulating speed intervals in the case of traction train braking; where a gradient value of the initial effective braking curve is calculated based on a train-chain average gradient principle;

correcting the gradient value of the initial effective braking curve to obtain a first effective braking curve;

calculating a braking intervention curve according to the first effective braking curve; where an intervention speed of each point on the intervention curve is calculated according to a speed of each point on the first effective braking curve; and

correcting the gradient value according to the braking intervention curve, and determining a gradient value adopted for calculating idling braking time within a calculation step.

Further, the calculating an initial effective braking curve of the train by segmentally accumulating speed intervals includes:

acquiring an initial speed of the train speed interval, a final speed of the speed interval, a braking calculation coefficient, a unit running basic resistance of the train, and permillage of an additional gradient in a braking section; and

calculating the initial effective braking curve according to the initial speed of the speed interval, the final speed of the speed interval, the braking calculation coefficient, the unit running basic resistance of the train, and the permillage of the additional gradient in the braking section.

Further, the correcting the gradient value of the initial effective braking curve includes:
determining a speed segment of the calculation step, where in each calculation step segment, an average gradient within a train length range at a current reverse-calculated position is determined as a first average gradient.

Further, the method includes: calculating an effective braking distance according to the first average gradient;

and calculating a second average gradient within the train length range according to the effective braking distance and a train length at the current reverse-calculated position.

Further, the method includes: determining a gradient within a current calculation step according to the first average gradient and the second average gradient; where an unfavorable gradient between the first average gradient and the second average gradient is taken as the gradient within the current calculation step.

Further, the method includes: when the first average gradient is greater than the second average gradient, calculating a corrected effective braking distance according to the gradient within the current calculation step, and determining a next reverse-calculated position; where a curve of the corrected effective braking distance is the first effective braking curve.

Further, the calculating a braking intervention curve according to the first effective braking curve includes:

acquiring a speed when train traction force is completely cut off, delay time for on-board equipment to cut off train traction, and idling braking time for emergency braking; and

calculating a monitoring distance of an emergency braking intervention curve through a monitoring calculation model.

Further, the method includes: acquiring an effective speed of emergency braking and calculating the idling braking time based on the average gradient according to the first effective braking curve to obtain a speed when first train traction force is completely cut off and a distance from a first position corresponding to the speed when the first train traction force is completely cut off to a target point; and

taking a sum of the distance from the first position to the target point and a train length as a first range, and taking an uphill gradient within the first range as a level track, and calculating an average gradient within the first range as a third average gradient.

Further, the method further includes:

determining a gradient for calculating the idling braking time within the first range according to the third average gradient;

where when the third average gradient is equal to zero, a value of the gradient for calculating the idling braking time is zero; and

when the average gradient is less than zero, calculating the idling braking time again according to the third average gradient, and calculating a speed when second train traction force is completely cut off and a distance from a second position corresponding to the speed when the second train traction force is completely cut off to the target point.

Further, the method further includes:

taking a sum of the distance from the second position to the target point and the train length as a second range; and taking an uphill gradient within the second range as a level track, and calculating an average gradient within the second range as a fourth average gradient; and

determining a gradient for calculating the idling braking time according to the fourth average gradient.

Further, the determining a gradient for calculating the idling braking time according to the fourth average gradient includes:

when the third average gradient is less than or equal to the fourth average gradient, taking the third average gradient as the gradient for calculating the idling braking time; and

when the third average gradient is greater than the fourth average gradient, calculating the idling braking time again according to the fourth average gradient, and calculating a speed when third train traction force is completely cut off and a distance from a third position corresponding to the speed when the third train traction force is completely cut off to the target point.

Further, the method further includes:

taking a sum of the distance from the third position to the target point and the train length as a third range; and taking an uphill gradient within the third range as a level track, and calculating an average gradient within the third range as a fifth average gradient; and

determining a gradient for calculating the idling braking time according to the fifth average gradient.

Further, the method further includes:
until within a (j-2)th range, when a jth average gradient is less than or equal to a (j+1)th average gradient, determining the jth average gradient as the gradient for calculating the idling braking time.

Based on the same inventive concept, the present invention further provides a system for calculating a gradient curve value of a traction train, including:

a calculation unit, configured to calculate an initial effective braking curve of the train by segmentally accumulating speed intervals in the case of traction train braking; where a gradient value of the initial effective braking curve is calculated based on a train-chain average gradient principle;

a correction unit, configured to correct the gradient value of the initial effective braking curve to obtain a first effective braking curve;

where the calculation unit is further configured to calculate a braking intervention curve according to the first effective braking curve; where an intervention speed of each point on the intervention curve is calculated according to a speed of each point on the first effective braking curve; and

a determination unit, configured to correct the gradient value according to the braking intervention curve, and determine a gradient value adopted for calculating idling braking time within a calculation step.

Based on the same inventive concept, the present invention further provides an electronic device, including:

a processor, a communication interface, a memory, and a communication bus, where the processor, the communication interface, and the memory communicate with one another via the communication bus;

the memory stores a computer program; and

the processor, when executing the program stored in the memory, implements the method for calculating a gradient curve value of a traction train as described above.

Based on the same inventive concept, the present invention further provides a computer-readable storage medium having a computer program stored thereon, where the computer program, when executed by a processor, implements the method for calculating a gradient curve value of a traction train as described above.

Beneficial effects of the present invention:
According to the present invention, calculating an initial effective braking curve of the train by segmentally accumulating speed intervals in the case of traction train braking; where a gradient value of the initial effective braking curve is calculated based on a train-chain average gradient principle; correcting the gradient value of the initial effective braking curve to obtain a first effective braking curve; calculating a braking intervention curve according to the first effective braking curve; where an intervention speed of each point on the intervention curve is derived according to a speed of each point on the first effective braking curve; and correcting the gradient value according to the braking intervention curve, and determining a gradient value adopted for calculating idling braking time within a calculation step. Based on the above technical solutions, a method for correcting a gradient value applicable to the derivation process of the effective braking curve and braking intervention curve of the locomotive traction train control model is proposed. According to the present invention, scenarios such as an abrupt change in a line gradient are considered, and calculation of a gradient value of a monitoring mode curve for a locomotive traction train is corrected in accordance with principles of monitoring efficiency and safety. Train control efficiency is improved, thereby enhancing safety of a monitoring distance of an entire monitoring curve during train movement.

Other features and advantages of the present invention will be set forth in the subsequent description, and partly become apparent from the description, or be understood through the implementation of the present invention. The objective and other advantages of the present disclosure may be achieved and obtained through the structures indicated in the specification and the accompanying drawings.

## BRIEF DESCRIPTION OF THE DRAWINGS

To more clearly illustrate the technical solutions in the embodiments of the present disclosure or in the prior art, the accompanying drawings that need to be used in the description of the embodiments or the prior art will be briefly described below. Apparently, the accompanying drawings in the description below merely illustrate some embodiments of the present disclosure. Those of ordinary skill in the art may also derive other accompanying drawings from these accompanying drawings without creative efforts.

FIG. 1 shows a flow chart of a method for calculating a gradient curve value of a traction train;

FIG. 2 shows a diagram of deriving an emergency braking intervention curve from an emergency braking effective curve;

FIG. 3 shows a schematic diagram of a gradient calculation principle under the European Standard ETCS Baseline 3;

FIG. 4 shows a schematic diagram of a gradient calculation principle for an effective braking curve;

FIG. 5 shows a schematic diagram of a gradient value principle for idling braking time calculation;

FIG. 6 shows a schematic diagram of a system for calculating a gradient curve value of a traction train; and

FIG. 7 shows a schematic diagram of an electronic device in the present invention.

## DETAILED DESCRIPTION

In order to make the purposes, technical solutions and advantages of the embodiments of the present invention clearer, the technical solutions in the embodiments of the invention will be explained clearly and completely below in conjunction with accompanying drawings. Apparently, the embodiments described are some embodiments of the invention, but not all of embodiments. Based on the embodiments in the present invention, all other embodiments obtained by those of ordinary skill in the art without making creative labor fall within the scope of protection of the present invention.

It should be noted that the terms "first", "second", etc. in this application are used to distinguish similar objects and are not necessarily used to describe a particular order or sequence. It should be understood that the data used in this way may be interchanged under appropriate circumstances, so as to facilitate the embodiments of this application described herein. In this application, the orientations or positional relationships indicated by the terms "upper", "lower", "left", "right", "front", "back", "top", "bottom", "inside", "outside", "middle", "vertical", "horizontal", "transverse", "longitudinal", etc. are based on the orientations or positional relationships shown in the accompanying drawings.

Two safety issues are to be addressed: first, when the train travels from an unfavorable combined gradient to a favorable combined gradient, and the train's overspeed triggers the on-board ATP braking, there is a safety risk that the train will eventually overrun the restricted target point; and second, when the train travels from a favorable combined gradient to an unfavorable combined gradient, the derived monitoring curve will have a safety issue of "sawtooth" abrupt changes. Currently, under the premise that the on-board train control model for locomotive traction trains adopts the basic principle of train-chain average gradient, the gradient is generally determined based on the average gradient within the train-chain range at the current position when calculating the effective braking distance curve and ATP intervention curve. This approach fails to consider scenarios such as sudden gradient changes, which may lead to the train overrunning the restricted target point and the safety hazard of sawtooth abrupt changes in the monitoring mode curve.

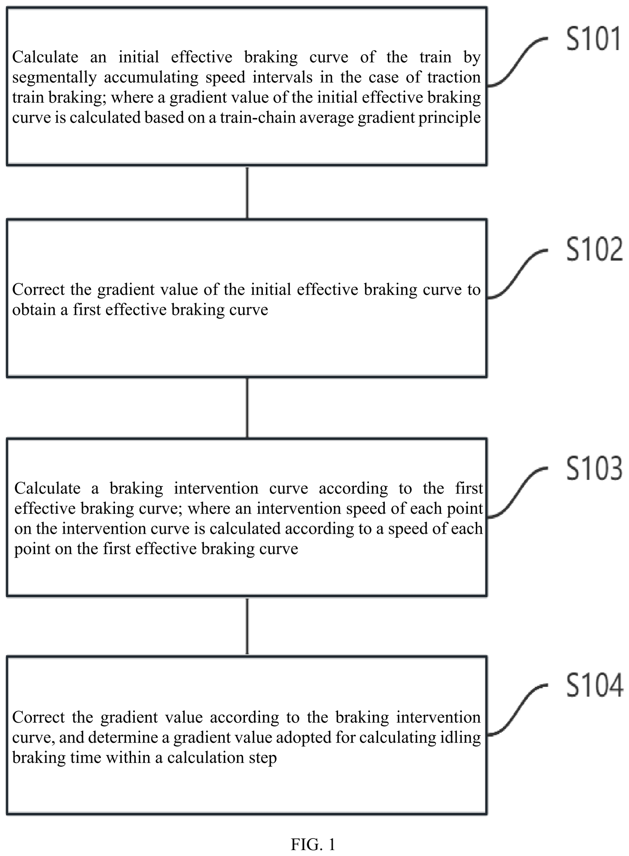

An objective of the present disclosure is to provide a method for calculating a gradient value, for use in calculation of braking intervention curves SBI and EBI of an on-board train control model for a locomotive traction train, so as to avoid the possibility of the train overrunning the restricted target point and the problem of sawtooth abrupt changes in the monitoring mode curve in scenarios with sudden gradient changes. An embodiment of the present invention provides a method for calculating a gradient curve value of a traction train. Referring to FIG. 1, the method includes:

S101: calculating an initial effective braking curve of the train by segmentally accumulating speed intervals in the case of traction train braking; where a gradient value of the initial effective braking curve is calculated based on a train-chain average gradient principle;

Specifically, the calculating an initial effective braking curve of the train by segmentally accumulating speed intervals includes:

acquiring an initial speed of the train speed interval, a final speed of the speed interval, a braking calculation coefficient, a unit running basic resistance of the train, and permillage of an additional gradient in a braking section; and

calculating the initial effective braking curve according to the initial speed of the speed interval, the final speed of the speed interval, the braking calculation coefficient, the unit running basic resistance of the train, and the permillage of the additional gradient in the braking section.

S102: correcting the gradient value of the initial effective braking curve to obtain a first effective braking curve;

Specifically, a speed segment of the calculation step is determined, where in each calculation step segment, an average gradient within a train length range at a current reverse-calculated position is determined as a first average gradient. An effective braking distance is calculated according to the first average gradient; and a second average gradient within the train length range is calculated according to the effective braking distance and a train length at the current reverse-calculated position. A gradient within a current calculation step is determined according to the first average gradient and the second average gradient; where an unfavorable gradient between the first average gradient and the second average gradient is taken as the gradient within the current calculation step.

When the first average gradient is greater than the second average gradient, a corrected effective braking distance is calculated according to the gradient within the current calculation step, and a next reverse-calculated position is determined; where a curve of the corrected effective braking distance is the first effective braking curve.

S103: calculating a braking intervention curve according to the first effective braking curve; where an intervention speed of each point on the intervention curve is calculated according to a speed of each point on the first effective braking curve; and

S104: correcting the gradient value according to the braking intervention curve, and determining a gradient value adopted for calculating idling braking time within a calculation step.

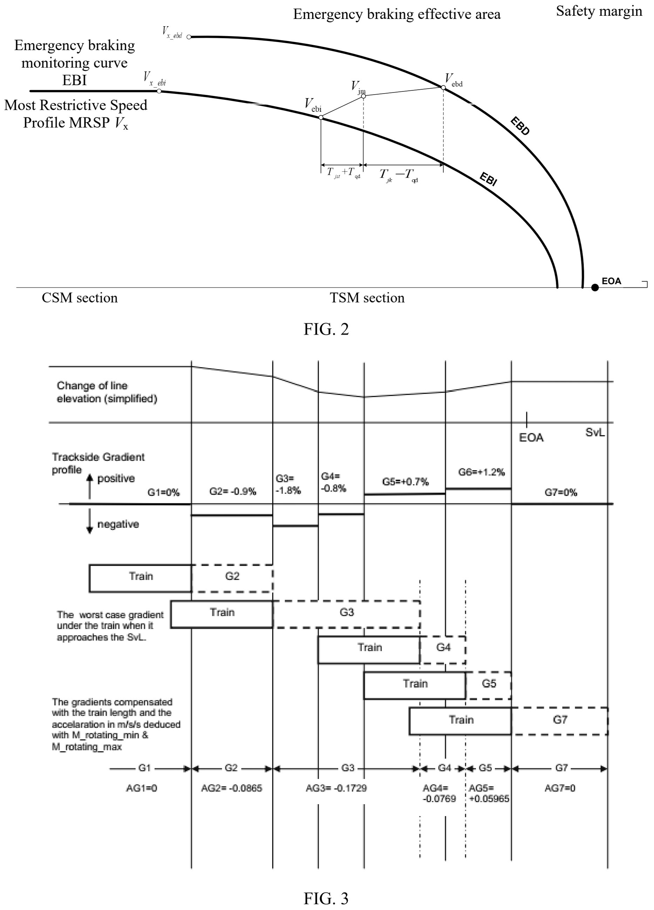

It should be noted that the derivation principles of the Emergency Braking Intervention (EBI) curve and Service Braking Intervention (SBI) curve for the on-board train control model are essentially the same. Taking the Emergency Braking Intervention (EBI) curve as an example, the EBI curve is derived based on the Emergency Braking Deceleration (EBD) curve according to a mathematical model. An emergency braking monitoring speed $V_{ebi}$ is derived from a speed on the Emergency Braking Deceleration (EBD) curve, based on system parameters of the on-board ATP equipment, including system delay time $T_{jst}$, train traction cut-off delay time $T_{qd}$, and idling braking time for train emergency braking $T_{jk}$, according to train marshalling parameters and gradient data. The braking intervention curve referred to in the present invention can be understood as the one derived using the same principle. Referring to FIG. 2, both the Emergency Braking Deceleration (EBD) curve and the idling braking time for emergency braking of the locomotive traction train are directly related to the track gradient, and the calculation principles for different gradients have a significant impact on the results of the monitoring curve.

There are two types of train models: a single-particle model and a train-chain model. The single-particle model simplifies the train into a single particle, while the train-chain model treats the train as an integral train chain. When calculating the monitoring mode curve, there are two gradient value determination principles according to different train models: a single-particle gradient value principle and a train-chain gradient value principle. According to different gradient processing methods, there are generally three types: the most unfavorable gradient, an actual gradient, and an average gradient.

The following provides specific illustrative explanations for the three commonly used processing methods: the most unfavorable gradient, the actual gradient, and the average gradient.

The most unfavorable gradient principle uses the most unfavorable gradient value within the calculation range as the gradient value adopted for the current monitoring curve calculation. The calculation of the most unfavorable gradient value is as shown in formula (1).

$$i_b(i_k, i_{k+1} \cdots\cdots i_n) = min(i_k, i_{k+1} \cdots\cdots i_n) \qquad (1)$$

where: $i_k, i_{k+1} \cdots\cdots i_n$ represent gradient permillage of all gradients covered within a calculation range.

The actual gradient value determination principle refers to the provisions in the European Standard ETCS Baseline 3. Referring to FIG. 3, when calculating the train monitoring curve, the train is treated as a single particle, and the gradient value at the current position is taken. The gradient data is processed safely towards the unfavorable side in accordance with the train tail retention principle, i.e., all gradients within the train-chain range are taken as unfavorable gradient values. When the train runs from a favorable gradient to an unfavorable gradient, the gradient within the train-chain range remains unchanged; and when the train runs from an unfavorable gradient to a favorable gradient, all favorable gradient values within the train-chain range are taken as unfavorable gradient values.

The principle for determining the average gradient value is to use the average gradient value within the calculation range as the gradient value adopted for the current monitoring curve calculation. The calculation of the average gradient value is as shown in formula (2):

$$i_h(i_k, i_{k+1} \cdots i_n) = \frac{\sum_{i=k}^{n}(i_i \cdot l_i)}{\sum_{i=k}^{n} l_i} \qquad (2)$$

where: $i_k, i_{k+1} \cdots i_n$: gradient permillage of all gradients covered within a calculation range;
$i_i$: gradient permillage of the $i$-th gradient covered within a calculation range; and
$l_i$: length of the $i$-th gradient covered within a calculation range (excluding the calculated length of the uncovered part), unit: meters (m).

Under the most unfavorable gradient value determination principle, if there is a short unfavorable gradient within the calculation range, that is, the train control curve is calculated entirely based on this gradient, an excessively long monitoring distance and low train control efficiency will occur. For the actual gradient value determination principle, when a freight train has a large number of marshalled vehicles and a long length, the unfavorable gradient will cover all gradients within the train length range. This also leads to an excessively long monitoring distance and low train control efficiency, and in extreme cases, the train control effect is similar to that of the most unfavorable gradient value determination principle. The average gradient value determination principle: when the calculation range of the single-particle model covers all gradients from the current position of the train to the End of Authority (EOA), the preceding and subsequent upward and downward gradients offset each other; after the gradients are averaged, the monitoring distance for downward gradients is offset, posing safety issues. When the calculation range of the train-chain model covers all gradients within the train length at the current calculation position, the average gradient value changes gradually with the calculation step; the monitoring distance of the entire monitoring curve features high safety, appropriate length, and relatively high train control efficiency.

The following provides a detailed description of the gradient value correction scheme for the effective braking curve in the present invention.

The effective braking curve EBD or SBD serves as the basis for calculating the braking intervention curve EBI or SBI. The effective braking curve for the locomotive traction train is generally calculated by segmental accumulation according to speed intervals, and its calculation formula is as shown in formula (3).

$$S_{bd} = 4.17 \sum \frac{(v_1^2 - v_2^2)}{1000\lambda \cdot \vartheta_h \cdot \varphi_h + \omega_0 + i_j} \qquad (3)$$

where $S_{bd}$ is an effective braking distance, m; $v_1$ is an initial speed of a speed interval, unit: km/h; $v_2$ is a final speed of a speed interval, unit: km/h; $\lambda$ is a braking calculation coefficient, determined by considering the discreteness of train braking performance and the pressure reduction amount for service braking application; $\vartheta_h$ is a train equivalent braking rate; $\varphi_h$ is an equivalent friction coefficient of a brake shoe or a brake pad; $\omega_0$ is basic specific running resistance of the train, unit: N/kN; and $i_j$ is additional gradient permillage of a braking section.

It can be seen from the above formula (3) that once the train type is determined, the Emergency Braking Deceleration (EBD) curve and Service Braking Deceleration (SBD) curve are affected by the additional gradient permillage of the braking section. When reverse-calculating the EBD curve, during the process of calculating the train-chain average gradient at the reverse-calculated position for gradient value determination, a sudden gradient change at the next reverse-calculated position will lead to insufficient calculated value of the effective braking distance, resulting in the possibility of the train overrunning the restricted target point. Therefore, during the calculation of the effective braking curve, the gradient value is corrected by a secondary iterative calculation.

Specifically, a speed segment of the calculation step is determined, where in each calculation step segment, an average gradient within a train length range at a current reverse-calculated position is determined as a first average gradient. An effective braking distance is calculated according to the first average gradient; and a second average gradient within the train length range is calculated according to the effective braking distance and a train length at the current reverse-calculated position. A gradient within a current calculation step is determined according to the first average gradient and the second average gradient; where an unfavorable gradient between the first average gradient and the second average gradient is taken as the gradient within the current calculation step.

When the first average gradient is greater than the second average gradient, a corrected effective braking distance is calculated according to the gradient within the current calculation step, and a next reverse-calculated position is determined; where a curve of the corrected effective braking distance is the first effective braking curve.

The following will take the effective braking curve EBD as an example for illustrative explanation.

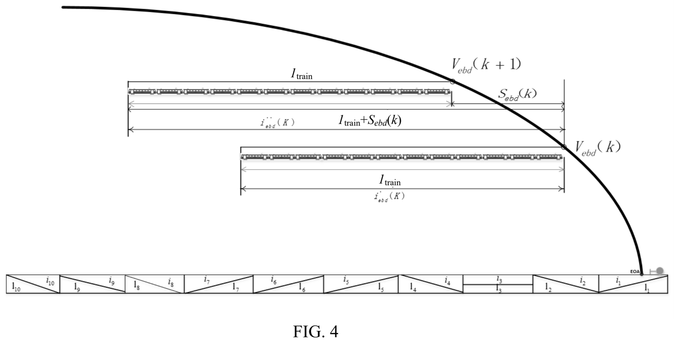

Exemplarily, referring to FIG. 4, a speed segment of a calculation step is determined, as shown in formula (4):

$$i'_{ebd}(K) = i'_h(i_2,i_3,i_4,i_5,i_6,i_7) = \frac{\sum_{i=2}^{7}(i_i \cdot l_i)}{l_{train}} \qquad (4)$$

where $i'_h(i_2,i_3,i_4,i_5,i_6,i_7)$ is an average gradient value of all gradients within a train length range in a current calculation step; in each calculation step, an average gradient $i'_{ebd}(K)$ within the train length range at a current reverse-calculated position is first determined, denoted as a first average gradient $i'_{ebd}(K)$; refer to formula (5):

$$i''_{ebd}(K) = i''_h(i_2,i_3,i_4,i_5,i_6,i_7,i_8) = \frac{\sum_{i=2}^{8}(i_i \cdot l_i)}{(l_{train}+S_{ebd(K)})} \qquad (5)$$

where $i''_h(i_2,i_3,i_4,i_5,i_6,i_7,i_8)$ is an average gradient value of all gradients within a range of a sum of a train length and an effective emergency braking distance $S_{ebd(K)}$ within a current calculation step; $i_i$ is a gradient value of all overlapping gradients within a calculation range; and $l_i$ is an overlapping length value of all overlapping gradients within the calculation range.

An effective braking distance $S_{ebd}(K)$ corresponding to a first average gradient $i'_{ebd}(K)$ is calculated; and then a second average gradient $i''_{ebd}(K)$ within a range of a sum of the train length and the effective braking distance at the current reverse-calculated position is calculated; refer to formula (6):

$$i_{ebd}(K) = \min\left(i'_{ebd}(K),i''_{ebd}(K)\right) \qquad (6)$$

An unfavorable gradient between a first average gradient $i'_{ebd}(K)$ and a second average gradient $i''_{ebd}(K)$ is taken as a gradient $i_{ebd}(K)$ within the current calculation step. Once gradient value calculation is completed, an effective braking distance $S_{ebd}(K)$ is re-corrected, and a next reverse-calculated position is determined. When the first average gradient $i'_{ebd}(K)$ is greater than the second average gradient $i''_{ebd}(K)$, the effective braking distance $S_{ebd}(K)$ shall be recalculated in accordance with the gradient, and a next reverse-calculated position shall be determined.

In some optional embodiments, the calculating a braking intervention curve according to the first effective braking curve includes:

acquiring a speed when train traction force is completely cut off, delay time for on-board equipment to cut off train traction, and idling braking time for emergency braking; and

calculating a monitoring distance of an emergency braking intervention curve through a monitoring calculation model.

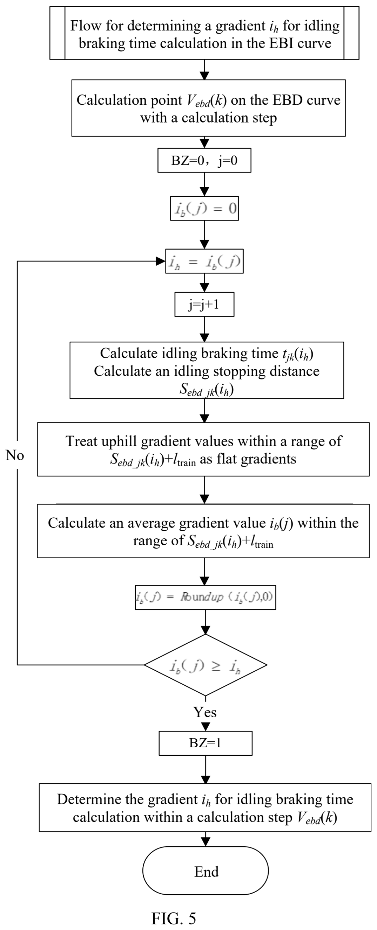

It should be noted that the braking intervention curve is based on the effective braking curve. As shown in FIG. 5, the derivation method of the braking intervention curve involved in the present invention is applicable to both the emergency braking intervention curve and the service braking intervention curve, and is derived according to the mathematical model. Taking the calculation of the emergency braking intervention (EBI) curve as an example, an emergency braking effective speed $V_{ebd}$ is determined according to each point on the Emergency Braking Deceleration (EBD) curve.

Specifically, it includes: acquiring an effective speed of emergency braking and calculating the idling braking time based on the average gradient according to the first effective braking curve to obtain a speed when first train traction force is completely cut off and a distance from a first position corresponding to the speed when the first train traction force is completely cut off to a target point; and taking a sum of the distance from the first position to the target point and a train length as a first range, and taking an uphill gradient within the first range as a level track, and calculating an average gradient within the first range as a third average gradient.

In some optional embodiments, the method further includes:

determining a gradient for calculating the idling braking time within the first range according to the third average gradient;

where when the third average gradient is equal to zero, a value of the gradient for calculating the idling braking time is zero; and

when the average gradient is less than zero, calculating the idling braking time again according to the third average gradient, and calculating a speed when second train traction force is completely cut off and a distance from a second position corresponding to the speed when the second train traction force is completely cut off to the target point.

Specifically, according to formula (7)

$$V_{ebi}(k) = V_{jm}(k) - \left(a_{jm\_iw}(k) + a_{ebi\_f}(k)\right) \times \left(T_{jst} + T_{qd}\right) \quad (7)$$

an intervention speed $V_{ebi}$ at each point on an emergency braking intervention curve is calculated, where $V_{ebi}(k)$: an emergency braking intervention speed of the train within the k-th calculation step, unit: m/s; $V_{jm}(k)$ is a speed of the train when traction is completely cut off within the k-th calculation step, unit: m/s; $T_{jst}$ is system delay time of on-board ATP equipment, unit: s; $T_{qd}$ is delay time for the on-board ATP equipment to cut off train traction, unit: s; $a_{jm\_iw}(k)$ is a gradient resistance deceleration of the train when traction is cut off within the k-th calculation step, unit: m/s²; and $a_{ebi\_f}(k)$ is a residual acceleration of the train between a speed $V_{ebi}(k)$ and a speed $V_{jm}(k)$ within the k-th calculation step, unit: m/s².
In the above formula (7), the speed $V_{ebi}(k)$ when train traction is completely cut off within the k-th calculation step is calculated through formula (8).

$$V_{jm}(k) = V_{ebd}(k) - a_{ebd\_iw}(k) \times \left(T_{jk} - T_{qd}\right) \quad (8)$$

where $V_{ebd}(k)$ is an emergency braking effective speed within the k-th calculation step, unit: m/s; and $a_{ebd\_iw}(k)$ is a gradient resistance deceleration of the train at the speed $V_{ebd}(k)$ within the k-th calculation step, unit: m/s². Since the influence of gradient has been considered in the calculation of idling braking time $T_{jk}$, a value of $a_{ebd\_iw}(k)$ is set to 0 m/s² during calculation;
A monitoring distance of the on-board emergency braking intervention (EBI) curve is calculated through formula (9):

$$S_{ebi}(k) = \frac{\left((V_{ebd}(k)+V_{jm}(k))\cdot(T_{jk}-T_{qd})+(V_{ebi}(k)+V_{jm}(k))\cdot(T_{jst}+T_{qd})\right)}{2} + S_{ebd}(k) \quad (9)$$

where $S_{ebd}(k)$ is a distance from a position corresponding to the speed $V_{ebd}(k)$ to a target point within the k-th calculation step, unit: m; and $S_{ebi}(k)$ is a distance from a position corresponding to the speed $V_{ebi}(k)$ to the target point within the k-th calculation step, unit: m.
For the calculation models in formulas (7), (8), and (9) above, once the train type and system configuration parameters are determined, $a_{jm\_iw}(k)$ and $T_{jk}$ are affected by the additional gradient permillage of the braking section.
The idling braking time of the train calculated under the unfavorable gradient principle is excessively long, resulting in low on-board train control efficiency. When calculating the train idling braking time under the average gradient principle, the derived monitoring curve may exhibit sawtooth abrupt changes in sections where adjacent gradients differ significantly. Considering comprehensively, the locomotive traction train has a large number of marshalled vehicles, long idling braking time, and a long train idling stopping distance. If only the average gradient at the calculation point on the effective braking curve is used as the gradient for the entire idling braking time calculation, there will be a problem of insufficient idling braking time when the gradient changes abruptly, which does not conform to the principle of fault-oriented safety. In the derivation process of the on-board train control monitoring curve EBI/SBI, the gradient value for idling braking time calculation adopts a cyclic calculation method to find the unfavorable average gradient $i_h$. For the gradient value used in train idling braking time calculation, based on the basic principle of the train-chain average gradient, the value shall be iteratively corrected according to the following algorithm.
In some optional embodiments, the method further includes:

taking a sum of the distance from the second position to the target point and the train length as a second range; and
taking an uphill gradient within the second range as a level track, and calculating an average gradient within the second range as a fourth average gradient; and

determining a gradient for calculating the idling braking time according to the fourth average gradient.

The determining a gradient for calculating the idling braking time according to the fourth average gradient includes:

when the third average gradient is less than or equal to the fourth average gradient, taking the third average gradient as the gradient for calculating the idling braking time; and

when the third average gradient is greater than the fourth average gradient, calculating the idling braking time again according to the fourth average gradient, and calculating a speed when third train traction force is completely cut off and a distance from a third position corresponding to the speed when the third train traction force is completely cut off to the target point.

Specifically, taking the emergency braking intervention (EBI) curve as an example, corresponding to a calculation point $V_{ebd}(k)$ on the EBD curve, idling braking time $T_{jk1}$ is first calculated under a flat gradient, and a speed $V_{jm1}$ when train traction is completely cut off and a distance $S_{ebd\_jk1}(k)$ from a position to the target point are calculated. A sum of a distance from the position to the target point and the train length $S_{ebd\_jk1}(k) + l_{train}$ is taken as a range, all uphill gradient values within the range are treated as level tracks, and an average gradient $i_{b1}$ within the range is calculated as a third average gradient. If the third average gradient $i_{b1}$ equals 0, a gradient $i_h$ for idling braking time calculation is set to 0, and the calculation is completed. If the third average gradient $i_{b1}$ is less than 0, the gradient $i_{b1}$ is used to recalculate idling braking time $T_{jk2}$, and a speed $V_{jm2}$ when second train traction is completely cut off and a distance $S_{ebd\_jk2}(k)$ from a second position corresponding to the speed when the second train traction is completely cut off to the target point are calculated. A sum of the distance and the train length $S_{ebd\_jk2}(k) + l_{train}$ is taken as a second range, all uphill gradient values within the second range are treated as level tracks, and an average gradient $i_{b2}$ within the range is calculated as a fourth average gradient. If the third average gradient $(i_{b1},0)$ is not greater than the fourth average gradient $(i_{b2},0)$, then the third average gradient $(i_{b1},0)$ is taken as a gradient $i_h$ for idling braking time calculation, and the calculation is completed. If the third average gradient $(i_{b1},0)$ is greater than the fourth average gradient $(i_{b2},0)$, the fourth average gradient $i_{b2}$ is used to recalculate idling braking time $T_{jk3}$, and a speed $V_{jk3}$ when third train traction is completely cut off and a distance $S_{ebd\_jk3}(k)$ from a third position corresponding to the speed when the third train traction is completely cut off to the target point are calculated.

The calculation of idling braking time for emergency braking and idling braking time for service braking of the locomotive traction train are as shown in formula (10):

$$t_k = (a + b \cdot r \cdot n) \cdot (c - d \cdot i_j) \qquad (10)$$

where a, b, b, d are secondary coefficients of idling braking time; r is a train braking pressure reduction; n is the number of marshalled train vehicles; and $i_j$ is the additional gradient permillage of the braking section. The idling braking time for the uphill gradient is taken according to the level track.

In some optional embodiments, the method further includes:

taking a sum of the distance from the third position to the target point and the train length as a third range; and taking an uphill gradient within the third range as a level track, and calculating an average gradient within the third range as a fifth average gradient; and

determining a gradient for calculating the idling braking time according to the fifth average gradient.

Specifically, the method further includes: repeating the steps of calculating the gradient for calculating the idling braking time through the fourth average gradient and the fifth average gradient to determine the gradient for calculating the idling braking time, until within a (j-2)th range, when a jth average gradient is less than or equal to a (j+1)th average gradient, determining the jth average gradient as the gradient for calculating the idling braking time.

Specifically, a sum of the distance $S_{ebd\_jm3}(k)(k)$ from the third position to the target point and the train length $l_{train}$ is taken as a third range. All uphill gradient values within this range are treated as level tracks, and an average gradient $i_{b3}$ within the range is calculated as a fifth average gradient. The magnitudes of the fourth average gradient $(i_{b2},0)$ and the fifth average gradient $(i_{b3},0)$ are determined, and the above process is repeated until a j-th average gradient $(i_{b(j)},0)$ is less than or equal to a (j+1)-th average gradient $(i_{b(j+1)},0)$. The j-th average gradient $(i_{b(j)},0)$ is taken as a gradient $i_h$ for idling braking time calculation.

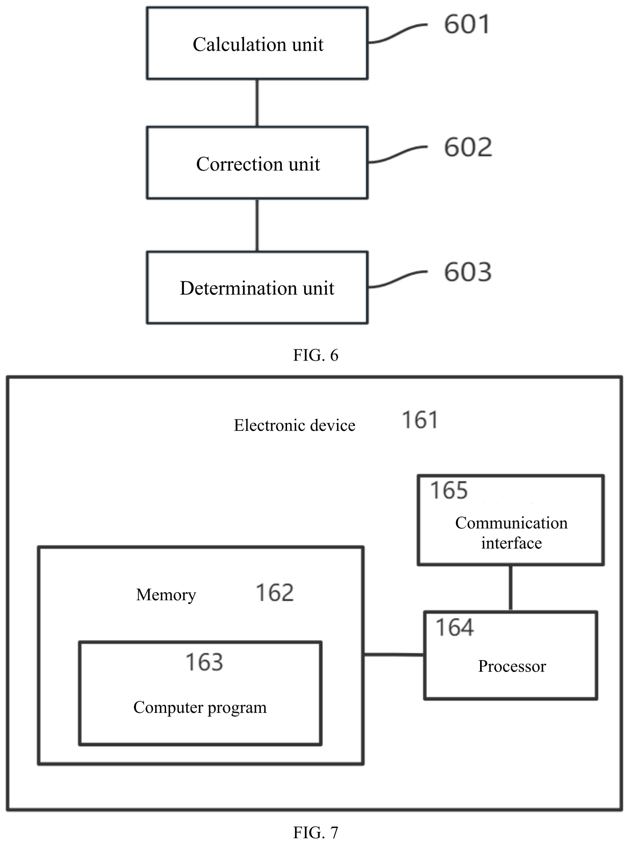

Based on the same inventive concept, the present invention further provides a system for calculating a gradient curve value of a traction train, referring to FIG. 6, including:

a calculation unit 601, configured to calculate an initial effective braking curve of the train by segmentally accumulating speed intervals in the case of traction train braking; where a gradient value of the initial effective braking curve is calculated based on a train-chain average gradient principle;

a correction unit 602, configured to correct the gradient value of the initial effective braking curve to obtain a first effective braking curve;

where the calculation unit 601 is further configured to calculate a braking intervention curve according to the first effective braking curve; where an intervention speed of each point on the intervention curve is calculated according to a speed of each point on the first effective braking curve; and

a determination unit 603, configured to correct the gradient value according to the braking intervention curve, and determine a gradient value adopted for calculating idling braking time within a calculation step.

Based on the same inventive concept, the present invention further provides an electronic device 161, as shown in FIG. 7, including a processor 164, a communication interface 165, a memory 162, and a communication bus, where the processor 164, the communication interface 165, and the memory 162 communicate with each other via the communication bus;

the memory 162 stores a computer program 163; and
the processor 164, when executing the program stored in the memory 162, implements the method for calculating a gradient curve value of a traction train.

The above communication bus may be a Peripheral Component Interconnect (PCI) bus, an Extended Industry Standard Architecture (EISA) bus, etc. The communication bus may be divided into an address bus, a data bus, a control bus, etc.
The communication interface 165 is configured for communication between the above electronic device 161 and other devices.
The memory 162 may include a Random Access Memory (RAM) 162 and may also include a non-volatile memory 162, such as at least one disk memory 162. Optionally, the memory 162 may also be at least one storage device located remotely from the above processor 164.
The above processor 164 may be a general-purpose processor 164, including a Central Processing Unit (CPU) 164, a Network Processor (NP) 164, etc.; it may also be a Digital Signal Processing (DSP) processor 164, an Application Specific Integrated Circuit (ASIC), a Field-Programmable Gate Array (FPGA), or other programmable logic devices, discrete gate or transistor logic devices, or discrete hardware components.
Based on the same inventive concept, the present invention further provides a computer-readable storage medium having a computer program 163 stored thereon, where the computer program 163, when executed by a processor 164, implements the method for calculating a gradient curve value of a traction train.
The computer-readable storage medium may be included in the equipment/device described in the above embodiments; it may also exist independently without being assembled into the equipment/device. The above computer-readable storage medium carries one or more programs, and when the one or more programs are executed, the method for calculating a gradient curve value of a traction train according to the embodiments of the present disclosure is implemented.
The above embodiments are only used to illustrate the technical solutions of this application, rather than limiting them. Although this application has been described in detail with reference to the foregoing embodiments, those of ordinary skill in the art should understand that it is still possible to modify the technical solution described in the foregoing embodiments, or to replace some technical features with equivalents. However, these modifications or replacements do not make the essence of the corresponding technical solutions deviate from the spirit and scope of the technical solutions of various embodiments of this application.

Claims

1. A method for calculating a gradient curve value of a traction train, **characterized by** comprising:

    calculating an initial effective braking curve of the train by segmentally accumulating speed intervals in the case of traction train braking; wherein a gradient value of the initial effective braking curve is calculated based on a train-chain average gradient principle;

correcting the gradient value of the initial effective braking curve to obtain a first effective braking curve;

calculating a braking intervention curve according to the first effective braking curve; wherein an intervention speed of each point on the intervention curve is calculated according to a speed of each point on the first effective braking curve; and

correcting the gradient value according to the braking intervention curve, and determining a gradient value adopted for calculating idling braking time within a calculation step.

2. The method according to claim 1, **characterized in that** the calculating an initial effective braking curve of the train by segmentally accumulating speed intervals comprises:

acquiring an initial speed of the train speed interval, a final speed of the speed interval, a braking calculation coefficient, a unit running basic resistance of the train, and permillage of an additional gradient in a braking section; and

calculating the initial effective braking curve according to the initial speed of the speed interval, the final speed of the speed interval, the braking calculation coefficient, the unit running basic resistance of the train, and the permillage of the additional gradient in the braking section.

3. The method according to claim 1, **characterized in that** the correcting the gradient value of the initial effective braking curve comprises:

determining a speed segment of the calculation step, wherein in each calculation step segment, an average gradient within a train length range at a current reverse-calculated position is determined as a first average gradient.

4. The method according to claim 3, **characterized by** further comprising:

calculating an effective braking distance according to the first average gradient; and calculating a second average gradient within the train length range according to the effective braking distance and a train length at the current reverse-calculated position.

5. The method according to claim 4, **characterized by** further comprising:

determining a gradient within a current calculation step according to the first average gradient and the second average gradient; wherein an unfavorable gradient between the first average gradient and the second average gradient is taken as the gradient within the current calculation step.

6. The method according to claim 5, **characterized by** further comprising:

when the first average gradient is greater than the second average gradient, calculating a corrected effective braking distance according to the gradient within the current calculation step, and determining a next reverse-calculated position; wherein a curve of the corrected effective braking distance is the first effective braking curve.

7. The method according to claim 1 or 6, **characterized in that** the calculating a braking intervention curve according to the first effective braking curve comprises:

acquiring a speed when train traction force is completely cut off, delay time for on-board equipment to cut off train traction, and idling braking time for emergency braking; and

calculating a monitoring distance of an emergency braking intervention curve through a monitoring calculation model.

8. The method according to claim 7, **characterized by** further comprising:

acquiring an effective speed of emergency braking and calculating the idling braking time based on the average gradient according to the first effective braking curve to obtain a speed when first train traction force is completely cut off and a distance from a first position corresponding to the speed when the first train traction force is completely cut off to a target point; and

taking a sum of the distance from the first position to the target point and a train length as a first range, and taking an uphill gradient within the first range as a level track, and calculating an average gradient within the first range as a third average gradient.

9. The method according to claim 8, **characterized by** further comprising:

determining a gradient for calculating the idling braking time within the first range according to the third average gradient;

wherein when the third average gradient is equal to zero, a value of the gradient for calculating the idling braking time is zero; and

when the average gradient is less than zero, calculating the idling braking time again according to the third average gradient, and calculating a speed when second train traction force is completely cut off and a distance from a second position corresponding to the speed when the second train traction force is completely cut off to the target point.

10. The method according to claim 9, **characterized by** further comprising:
taking a sum of the distance from the second position to the target point and the train length as a second range; and
taking an uphill gradient within the second range as a level track, and calculating an average gradient within the second range as a fourth average gradient; and
determining a gradient for calculating the idling braking time according to the fourth average gradient.

11. The method according to claim 10, **characterized in that** the determining a gradient for calculating the idling braking time according to the fourth average gradient comprises:
when the third average gradient is less than or equal to the fourth average gradient, taking the third average gradient as the gradient for calculating the idling braking time; and
when the third average gradient is greater than the fourth average gradient, calculating the idling braking time again according to the fourth average gradient, and calculating a speed when third train traction force is completely cut off and a distance from a third position corresponding to the speed when the third train traction force is completely cut off to the target point.

12. The method according to claim 11, **characterized by** further comprising:

taking a sum of the distance from the third position to the target point and the train length as a third range; and
taking an uphill gradient within the third range as a level track, and calculating an average gradient within the third range as a fifth average gradient; and
determining a gradient for calculating the idling braking time according to the fifth average gradient.

13. The method according to claim 12, **characterized by** further comprising:
until within a (j-2)th range, when a jth average gradient is less than or equal to a (j+1)th average gradient, determining the jth average gradient as the gradient for calculating the idling braking time.

14. A system for calculating a gradient curve value of a traction train, **characterized by** comprising:

a calculation unit, configured to calculate an initial effective braking curve of the train by segmentally accumulating speed intervals in the case of traction train braking; wherein a gradient value of the initial effective braking curve is calculated based on a train-chain average gradient principle;
a correction unit, configured to correct the gradient value of the initial effective braking curve to obtain a first effective braking curve;
wherein the calculation unit is further configured to calculate a braking intervention curve according to the first effective braking curve; wherein an intervention speed of each point on the intervention curve is calculated according to a speed of each point on the first effective braking curve; and
a determination unit, configured to correct the gradient value according to the braking intervention curve, and determine a gradient value adopted for calculating idling braking time within a calculation step.

15. An electronic device, **characterized by** comprising:

a processor, a communication interface, a memory, and a communication bus, wherein the processor, the communication interface, and the memory communicate with one another via the communication bus;
the memory stores a computer program; and
the processor, when executing the program stored in the memory, implements the method for calculating a gradient curve value of a traction train according to any one of claims 1 to 13.

16. A computer-readable storage medium, **characterized by** having a computer program stored thereon, wherein the computer program, when executed by a processor, implements the method for calculating a gradient curve value of a traction train according to any one of claims 1 to 13.

Calculate an initial effective braking curve of the train by segmentally accumulating speed intervals in the case of traction train braking; where a gradient value of the initial effective braking curve is calculated based on a train-chain average gradient principle

S101

Correct the gradient value of the initial effective braking curve to obtain a first effective braking curve

S102

Calculate a braking intervention curve according to the first effective braking curve; where an intervention speed of each point on the intervention curve is calculated according to a speed of each point on the first effective braking curve

S103

Correct the gradient value according to the braking intervention curve, and determine a gradient value adopted for calculating idling braking time within a calculation step

S104

FIG. 1

Emergency braking effective area        Safety margin

$V_{x\_ebd}$

Emergency braking
monitoring curve
EBI

$V_{x\_ebi}$

Most Restrictive Speed
Profile MRSP $V_x$

$V_{ebd}$

$V_{jm}$

$V_{ebi}$

EBD

EBI

$T_{jst}+T_{qd}$    $T_{jk}-T_{qd}$

EOA

CSM section                TSM section

FIG. 2

Change of line
elevation (simplified)

EOA        SvL

Trackside Gradient
profile
↑ positive

G3=        G4=
-1.8%      -0.8%        G5=+0.7%        G6=+1.2%

G1=0%        G2= -0.9%        G7=0%

↓ negative

| Train | G2 |

The worst case gradient
under the train when it
approaches the SvL.

| Train | G3 |

| Train | G4 |

| Train | G5 |

The gradients compensated
with the train length and the
accelaration in m/s/s deduced
with M_rotating_min &
M_rotating_max

| Train | G7 |

—— G1 ——▶◀— G2 —▶◀——— G3 ———▶◀— G4 —▶◀— G5 —▶◀——— G7 ——▶

AG1=0        AG2= -0.0865        AG3= -0.1729        AG4=        AG5=        AG7=0
                                                     -0.0769     +0.05965

FIG. 3

FIG. 4

Flow for determining a gradient $i_h$ for idling braking time calculation in the EBI curve

Calculation point $V_{ebd}(k)$ on the EBD curve with a calculation step

BZ=0，j=0

$i_b(j) = 0$

$i_h = i_b(j)$

j=j+1

Calculate idling braking time $t_{jk}(i_h)$
Calculate an idling stopping distance $S_{ebd\_jk}(i_h)$

Treat uphill gradient values within a range of $S_{ebd\_jk}(i_h)+l_{train}$ as flat gradients

Calculate an average gradient value $i_b(j)$ within the range of $S_{ebd\_jk}(i_h)+l_{train}$

$i_b(j) = Roundup\ (i_b(j),0)$

No

$i_b(j) \geq i_h$

Yes

BZ=1

Determine the gradient $i_h$ for idling braking time calculation within a calculation step $V_{ebd}(k)$

End

FIG. 5

```
┌─────────────────────────┐
│     Calculation unit     │ ─── 601
└─────────────────────────┘
            │
┌─────────────────────────┐
│     Correction unit      │ ─── 602
└─────────────────────────┘
            │
┌─────────────────────────┐
│    Determination unit    │ ─── 603
└─────────────────────────┘
```

FIG. 6

```
┌──────────────────────────────────────────────────────────┐
│  Electronic device          161                           │
│                                                            │
│                                  ┌──────────────────────┐  │
│                                  │ 165                   │  │
│                                  │  Communication        │  │
│                                  │  interface            │  │
│                                  └──────────────────────┘  │
│  ┌────────────────────────────┐           │               │
│  │ Memory        162          │           │               │
│  │                            │  ┌──────────────────────┐  │
│  │  ┌──────────────────────┐  │  │ 164                   │  │
│  │  │ 163                   │──│──│                       │  │
│  │  │  Computer program     │  │  │  Processor            │  │
│  │  └──────────────────────┘  │  └──────────────────────┘  │
│  └────────────────────────────┘                           │
│                                                            │
└──────────────────────────────────────────────────────────┘
```

FIG. 7

## INTERNATIONAL SEARCH REPORT

| International application No. |
|---|
| **PCT/CN2024/122322** |

| A. | CLASSIFICATION OF SUBJECT MATTER |
|---|---|

B61L15/00(2006.01)i; G06F30/15(2020.01)i; G06F30/20(2020.01)i; G06F119/14(2020.01)i; G06F119/12(2020.01)i

According to International Patent Classification (IPC) or to both national classification and IPC

| B. | FIELDS SEARCHED |
|---|---|

Minimum documentation searched (classification system followed by classification symbols)

IPC: B61L G06F

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; IEEE: 全路通信, 张万强, 张松臣, 李琴, 陈立华, 姚文华, 耿烨华, 王玺宪, 坡度, 梯度, 坡道, 有效制动曲线, 制动干预曲线, 修正, 补偿, 校准, 校正, 空走, slope, gradient, effective braking curve, braking intervention curve, correct+, calibrat+, idl+ time

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 118025262 A (BEIJING NATIONAL RAILWAY RESEARCH & DESIGN INSTITUTE OF SIGNAL & COMMUNICATION LTD.) 14 May 2024 (2024-05-14) <br> claims 1-16 | 1-16 |
| A | CH 698947 B1 (ALSTOM SWITZERLAND LTD.) 15 December 2009 (2009-12-15) <br> description, paragraphs [0012]-[0053] | 1-16 |
| A | CN 114987576 A (CASCO SIGNAL LTD.) 02 September 2022 (2022-09-02) <br> entire document | 1-16 |
| A | CN 117068239 A (HUNAN CRRC TIMES COMMUNICATION SIGNALS CO., LTD.) 17 November 2023 (2023-11-17) <br> entire document | 1-16 |
| A | WO 2023072534 A1 (SIEMENS MOBILITY AG) 04 May 2023 (2023-05-04) <br> entire document | 1-16 |
| A | JP 2023141304 A (TOSHIBA CORP. et al.) 05 October 2023 (2023-10-05) <br> entire document | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 January 2025** | **12 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/122322**

| Patent document cited in search report | | | Publication date (day/month/year) | Patent family member(s) | Publication date (day/month/year) |
|---|---|---|---|---|---|
| CN | 118025262 | A | 14 May 2024 | None | |
| CH | 698947 | B1 | 15 December 2009 | None | |
| CN | 114987576 | A | 02 September 2022 | None | |
| CN | 117068239 | A | 17 November 2023 | None | |
| WO | 2023072534 | A1 | 04 May 2023 | None | |
| JP | 2023141304 | A | 05 October 2023 | None | |

Form PCT/ISA/210 (patent family annex) (July 2022)